# EUROPEAN PATENT SPECIFICATION

(11) **EP 4 094 648 B1**
(45) Date of publication and mention of the grant of the patent: **08.10.2025**
(21) Application number: 21175579.8
(22) Date of filing: 25.05.2021
(51) Int. Cl.: A47J 43/042

(54) **INTEGRATED BLENDER**
INTEGRIERTER MISCHER
MÉLANGEUR INTÉGRÉ

(43) Date of publication of application: 30.11.2022
(73) Proprietor: BSH Hausgeräte GmbH, 81739 München (DE)
(72) Inventor: Semeja, Uros, 3327 Smartno ob Paki (SI); Dichtl, Tamara, 83607 Holzkirchen (DE); Knez, Simon, 3311 Sempeter v savinjski dollini (SI); Skatulla, Marcus, 83374 Traunwalchen (DE); Thalhammer, Maren, 80337 München (DE)

(56) References cited:
- US-A1- 2015 305 564
- US-A1- 2018 073 915
- US-A1- 2020 359 842

## Description

Present invention concerns a blender and a system with a blender. More specifically, present invention comprises an improved technique for preparing food with a blender by following a recipe.

A blender comprises a blending container with a processing tool with blades or similar and electric motor acting upon the processing tool with blades. In order to prepare food according to a predetermined recipe, a user must measure ingredients to add into said container with a separate scale or volumeter. This procedure may be tedious and error prone so that the user may chose not to follow the recipe or not use the blender very often.

EP 3 116 360 A1 discloses a blender with a built-in scale, which may simplify food preparation. However, as the scale lies between the receptacle and a base unit with the motor where a user may touch it. This configuration requires a safety extra low voltage (SELV) power supply that is galvanically separated from the blenders main supply voltage (230Vac).

Blenders comprising a weighing function are known from US2015/305564A1 or US2020/359842A1.

A blender comprising a weighing function according to the preamble of claim 1 is known from US2018/073915A1.

One object of present invention lies in providing an improved technique for measuring weight in a blender. Another object lies in improved guiding a user through steps of a predetermined recipe to be carried out with said blender. The invention solves the given objects through the subject matter of attached independent claims. Dependent claims give preferred embodiments.

According to a first aspect of present invention a blender for food preparation, especially a desktop blender, comprises a receptacle for holding an ingredient within; an electric motor, mechanically acting on a processing tool with blades within the receptacle; a unit base with a weight sensor for determining a gross weight of the blender; and a wireless communication unit for transmitting the determined weight to an external device.

As the weight sensor and all other electrical parts are out of reach of a user operating they do not have to be galvanically separated from the blenders electric main power supply. Production cost and unit complexity may therefore be lowered. By subtracting a known weight of the blender from a determined gross weight, the weight of ingredients in the receptacle may be determined. An amount of one single added ingredient may be determined in a similar fashion.

The blender may be used as part of a system for guiding a user through steps of food preparation. A user interface may be implemented outside the blender and connected through said wireless communication unit.

The weight sensor comprises several force measuring elements disposed underneath the unit base. The blender may utilize the force measuring elements as equipment feet. All weight force of the blender onto a surface it stands on may be transferred through said elements so that a gross weight of the blender may be easily determinable on the basis of the forces. There may be at least three, more preferably four or more force-measuring elements spaced apart from each other. The elements may be distributed evenly on a circle underneath the unit base. Each force measuring element may comprise a strain gauge adhered to a beam that is deformable in response to a force between the blender and the surface. The strain gauge is adapted to change its electrical resistance in accordance with a deformation of the beam. The beam may be manufactured from any elastically deformable material such as metal or plastic. In one especially preferred embodiment the beam lies in a plane parallel to the surface and may have an approximately spiral shape.

The blender may further comprise a control unit that is adapted to control the blender in response to a signal received via the communication unit in answer to a transmitted weight. The signal may be received from an external device that may hold a recipe with information on how much of an ingredient should be added into said receptacle.

It is furthermore preferred that the blender also comprises a user operable element for controlling a motor speed. The blender may thus be usable for food preparation without any external device. It is also preferred that the user operable element permits to select one of a plurality of different motor speeds or predetermined speed sequences. The element may comprise a turnable knob, preferably with push-button functionality. The knob may have a predetermined turn range or be infinitely turnable, in both cases continuously or in a predetermined number of steps per revolution. Easy access to controlling a wide range of blender functions may be provided.

The blender may further comprise an optical element for outputting a one-dimensional value. A chosen setting, motor speed, speed sequence or blending program may be easily indicated through said optical element, thereby further easing blender operation when there is no external device in communication with it. The optical element may comprise a predetermined number of light sources such as LEDs that may be arranged in one line or in a circle. In case of a circular control element it is preferred that the optical element comprises a ring of light sources on or around the control element.

According to another aspect of present invention a system comprises a blender described herein; and a mobile device with a wireless communication unit. In this, the mobile device is adapted to forward information received from the blender to a remote appliance; and to output information received from the remote appliance in response to the forwarded information. In another embodiment a second mobile device is adapted to forward information from the blender to the remote appliance. In yet another embodiment information is forwarded via another household appliance with has access to a data network, preferably through WIFI. Data traffic from the blender to the remote appliance does not necessarily take the same way as data traffic in the opposite direction. In one embodiment, different mobile devices or routers handle data in different directions. This way sensitive control data from the remote appliance to the blender, e.g. a request to start blending, may be routed through a trusted connection while upload information may be routed through a better accessible device or one that is cheaper to use.

Recipe information is not required to be stored inside the external device. Instead, the recipe may be stored on a remote appliance like a server or a service, for instance in a cloud. The device may act firstly as a communication gateway to enable transfer of weight information from the blender to the appliance, and secondly as a user interface. A data connection between the external device and the appliance may be done in an arbitrary way, including wireless techniques like WLAN or a cellular network and wired techniques like Ethernet, DSL or ISDN.

The mobile device may be adapted to provide audio and/or visual feedback to a weight or change of weight of the blender. A user may thus be supported in adding a predetermined quantity of a predetermined ingredient into said receptacle for food preparation. The mobile device may also be serviceable for selecting a recipe that may be stored on the appliance. The device may be adapted to support a dialogue between the user and the appliance, for instance for stepwise selecting, changing and scaling a recipe according to a user's demands.

The mobile device may be adapted to receive a target weight from the remote appliance and to output a signal indicative of the weight received from the blender approaching the target weight. A user pouring an ingredient into the receptacle may therefore be informed in time about the amount added into the blender reaching a target amount. The user may achieve precise and effortless supplying of said ingredient in the desired quantity. In this mode, the mobile device may directly process the weight information provided by the blender in order to secure timely execution. Network latency for information to travel from the device to the appliance and back to the device may be omitted.

According to an aspect not according to the invention, but present for illustration purposes only, an appliance may comprise a communication interface and be adapted to receive weight information from a blender; to relate the weight information to predetermined blending recipe information; and to provide an operational information for operating the blender. The appliance may be running on a server or virtual server, for instance in a datacentre or in a cloud. The appliance may have access to a collection of recipes for preparing food with or involving a blender. In one embodiment, the appliance may collect information from other household devices in the same household as the blender so that directions given for following a recipe may be more precise or more helpful. The appliance may also collect usage information from a multitude of blenders so that popular techniques or recipes may be more easily propagated to a user.

According to an aspect not according to the invention, but present for illustration purposes only, a method comprises steps of determining a quantity of an ingredient to add into a blender according to a predetermined recipe; of determining an increase in gross weight of said blender; and of providing an indication of a remaining quantity to add. The method may be carried out in part or completely by a blender or a system disclosed herein.

The invention will now be explained with more detail making reference to the enclosed figures in which:
- figure 1: shows a blender in a food processing system;
- figure 2: shows one embodiment of a weight sensor integrated into a blender; and
- figure 3: shows a flowchart of a method for operating a blender.

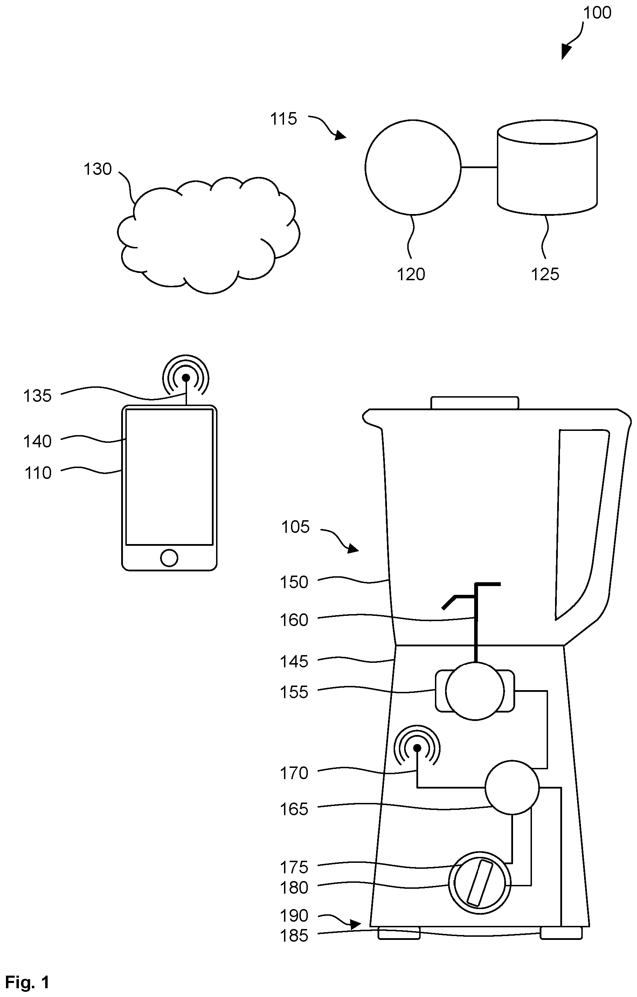

Figure 1 shows a system 100 with a blender 105, a device 110 external to the blender 105 and an appliance 115. The blender 105 is adapted to be used in food processing, preferably in a household. The device 110 may be a mobile device like a mobile phone, a smart phone, a tablet computer or a laptop computer. The device 110 is adapted to be operated by a user in said household. It is therefore assumed that the device 110 is located near the blender 110, preferably in operating distance by a user. The appliance 115 is preferably implemented as a software component running on a computer like a server or a virtual processor, possibly in a datacentre. The appliance 115 is generally not part of said household. Several household devices such as blenders 105 or other kitchen devices, vacuum cleaners or other may communicate with the appliance 115.

The appliance 115 generally comprises a processing unit 120 and a data storage 125. The processing unit 120 may be adapted to process information according to an application program. The data storage 125 may hold a number of recipes or similar operation sequences for preparing food or beverage in a repeatable fashion. The storage 125 may also hold usage, personal or feedback information that was collected during use of household devices. The appliance 115 is adapted to electronically communicate over one or several networks 130, which are symbolically shown as a cloud and which may comprise or be attached to the internet.

The device 110 is adapted to communicate with the appliance 115 over the network 130. For this, additional infrastructure may be provided in the household, such as a WLAN router, an Ethernet hub, a modem or a fibre optics adapter. The device 110 may also comprise a wireless communication unit 135 for communicating with another device such as the blender 105. For user interaction, optical and/or acoustic output means may be provided, and there may be input means such as buttons. In present embodiment, a touchscreen 140 is shown as an exemplary user input/output device.

The blender 105 comprises a base 145 on which a receptacle 150 may be placed. The receptacle 150 is preferably easily removable from the base 145 and may be manufactured from a transparent material like glass. Inside the base 145 there may be an electric motor 155 that is adapted to mechanically operate a processing tool 160 with blades inside the receptacle 150, such as to stir or mince ingredients placed therein.

A control unit 165 is adapted to control the motor 155 and is preferably connected to a wireless communication unit 170 which is adapted to communicate with the device 110 through its corresponding wireless communication unit 135. Both devices 105, 110 may for instance communicate over Bluetooth, WLAN or an infrared communication link. There may be a user input element 175 like a knob and/or an optical output element 180 like a strip of LEDs. In present embodiment, a knob 175 may be turned endlessly in both directions and provide haptic feedback by rasterising the turning motion into predetermined steps of e.g. 15°. By turning the knob 175, a turning speed of the motor 155 may be selectable. The knob 175 may also be push-activated, for instance for turning the motor 155 on or off.

The LED strip 180 comprises in present embodiment a plurality of LEDs arranged in a circle on or around said knob 175. The number of LEDs may match the number of rasterised rotary positions of the knob 175. The LEDs may be controlled together or individually so that for instance one or several rotating lights may be shown as an animation. The LEDs may also be controllable in their brightness, together or individually.

On an underside of the base 145 there are three, four or more equipment feet 185 separating the base unit 145 from an underlying surface. The equipment feet 185 may be part of a weight sensor 190 that is adapted to determine a gross weight of the blender 105 and all ingredients inside the receptacle 150 by determining force acting between the base unit 145 and the surface it stands on.

It is proposed that the blender 105 is adapted to determine its gross weight by means of the weight sensor 190. A determined weight may be transmitted via the wireless communication unit 170 to the external device 110 which may or may not process the received information. In one embodiment the devices 110 encrypts the information before it forwards it over the network 130 to the appliance 115. The appliance 115 may decrypt the received information, compare it with a target value that reflects the weight of an ingredient that is to be added into the receptacle at a present stage of food preparation. An indication of an action to take (e.g. stop pouring / stop adding / add updated amount / add one more) may be provided and transmitted back to the device 110, preferably also in an encrypted way. The device 110 may then output the provided information or action to take to a user.

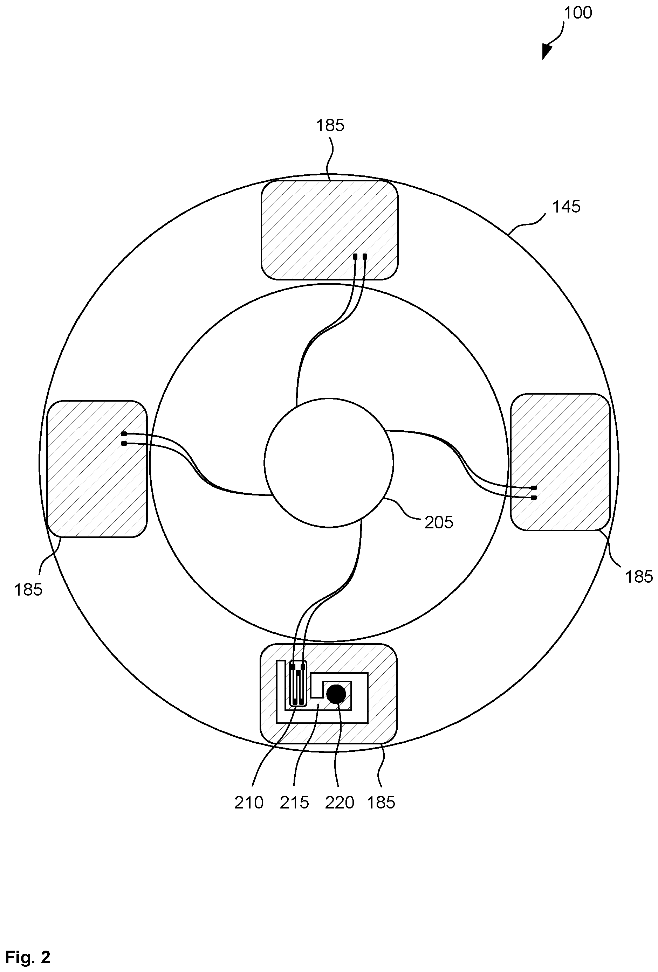

Figure 2 shows a schematic view of a weight sensor 190 integrated into a blender 105 in one embodiment. The shown embodiment is viewed from below the blender 105. The weight sensor 190 comprises one measuring unit 205 and four force sensors 210 that are each integrated with or into one equipment foot 185. The equipment foot 185 on the bottom is shown in more detail, thereby revealing a flexible beam 215 that extends between the unit base 145 and a support 220 adapted to stand on a surface on which the blender 105 is placed.

The beam 215 may be made of any flexible material such as resin, plastic or metal. Here, the beam 215 is made out of sheet material and shaped such that it forms a shape similar to a short spiral or the letter G. The beam 215 may be punched from sheet metal in one embodiment. Glued flatly onto a portion of the beam 215 is the force sensor 210, which is adapted to detect a temporary deformation of the beam 215 in answer to a force caused by the weight of the blender 105. The sensor 210 may comprise one or an arrangement of several strain gauges, which are adapted to change their electrical resistance when elongated or clinched. The force 210 sensor is preferred to be attached to a portion of the beam 215 that is close to the unit base 145 and far from the support 220, where deformation forces are maximised according to the lever principle. The force sensors 210 may be electrically connected such that the measuring unit 205 may determine the weight of the blender 105 on the basis of one electrical resistance only. More complex layouts are also possible.

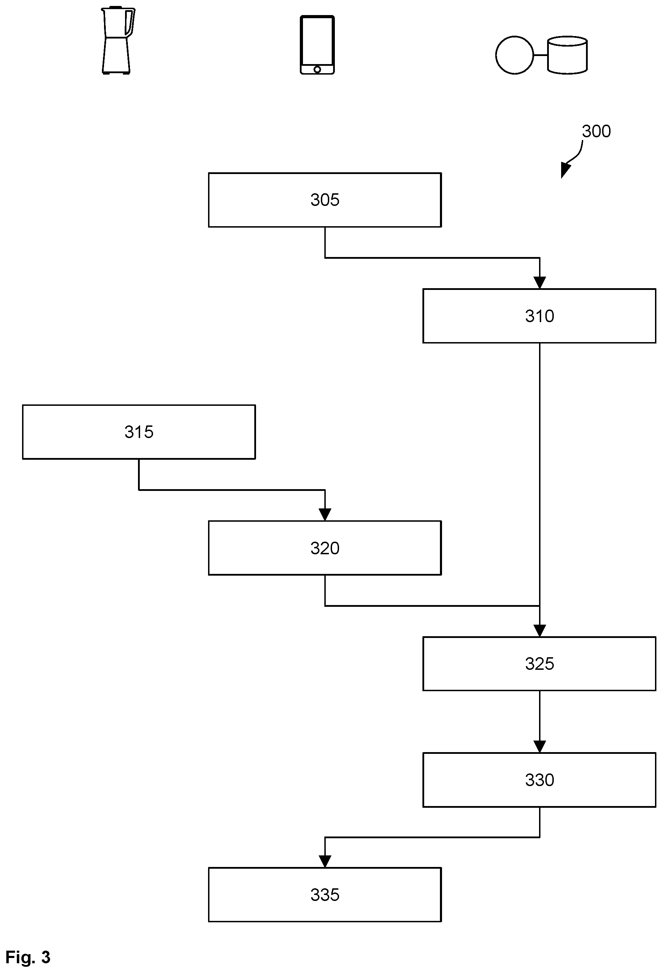

Figure 3 shows a flowchart of an exemplary method 300 for operating a blender 105. Steps shown in a left portion of the drawing are preferred to be carried out by the blender 105; steps in a middle portion are preferred to be carried out by a device 110 and steps shown in a right portion are preferred to be carried out by an appliance 115. Symbols for the blender 105, the devices 110 and the appliance 115 are shown in miniature for orientation.

In a step 305 one of a plurality of recipes stored inside the data storage 125 may be selected by a user operating the device 110. Interaction between the user and the appliance 115 may involve a dedicated app or a general browser application running on the device 110. The user may also be permitted to upload a recipe to the appliance 115. The recipe may be scaled, for instance in order to adapt a recipe for four persons to only two.

After selection of the recipe it is carried out step by step with the help of elements of the system 100. In a step 310 an ingredient to add into the receptacle 150 is determined. The ingredient has an associated weight or its weight may be determined. Should for instance the recipe call for an egg, a standard or average weight of an egg (50 - 60 g) may be used. Information about standard or average weights of various ingredients may be stored at the appliance 115.

In a step 315, the blender 105 determines its own gross weight, including the weight of everything that was previously added into the receptacle150. This step 315 may be carried out repeatedly or continuously while the blender 105 is powered on or while a food preparation process is in progress. The determined weight may then be transmitted to the device 110, which may relay it in a step 320 towards the appliance 115. The appliance 115 may then process the weight in a step 325. The weight of an ingredient that is added into the receptacle 150 may be determined on the basis of its current weight minus the gross weight of the blender 105 before adding the ingredient was begun. This subtraction may be carried out alternatively on side of the blender 105, by the device 110 or on the side of the appliance 115.

The appliance 115 may determine that a target weight of the ingredient to be added is reached and provide a corresponding signal in a step 330. The appliance may also determine how much more of the ingredient must be added or for how long pouring should continue so that the target weight is reached. This information or a corresponding action may be transmitted to the device 110 which may provide the action or information in a step 335. In this, the device 110 may interpret, visualize or acoustically provide the information. The action may for instance comprise proceeding to the next ingredient in step 310 or to process added ingredients by controlling the motor 155 to a predetermined speed.

In one embodiment, the device 110 may take over comparison of added vs. target weight and provide corresponding information directly to a user. However, a following action or another ingredient to add is preferred to be determined on side of the appliance 115.

### Reference numerals

- 100: system
- 105: blender
- 110: device, mobile device
- 115: appliance
- 120: processing unit
- 125: data storage
- 130: network
- 135: wireless communication unit
- 140: touchscreen
- 145: base
- 150: receptacle, blending container
- 155: motor
- 160: processing tool with blades
- 165: control unit
- 170: wireless communication unit
- 175: input element (knob)
- 180: output element (LED strip)
- 185: equipment foot
- 190: weight sensor

- 205: measuring unit
- 210: force sensor
- 215: flexible beam
- 220: support

- 300: method
- 305: chose recipe
- 310: determine ingredient
- 315: determine gross weight
- 320: relay gross weight
- 325: process gross weight
- 330: determine action
- 335: indicate action

## Claims

1. Blender (105) for food preparation, the blender (105) comprising:
- a receptacle (150) for holding an ingredient within;
- an electric motor (155), mechanically acting on a processing tool (160) with blades within the receptacle (150);
- a unit base (145) with a weight sensor for determining a gross weight of the blender (105);
- a wireless communication unit (170) for transmitting the determined weight to an external device, wherein the weight sensor comprises several force measuring elements (210) **characterised in that** the weight sensor is disposed underneath the unit base (145) and **in that** no galvanic separation is present between the weight sensor and a main power supply of the blender (105).

2. Blender (105) according to claim 1, further comprising a control unit (165) that is adapted to control the blender (105) in response to a signal received via the communication unit in answer to a transmitted weight.

3. Blender (105) according to one of the above claims, further comprising a user operable element (175) for controlling a motor (155) speed.

4. Blender (105) according to one of the above claims, further comprising an optical element for outputting a one-dimensional value.

5. System (100), comprising a blender (105) according to one of the above claims; and a mobile device (110) with a wireless communication unit, wherein the mobile device (110) is adapted to forward information received from the blender (105) to a remote appliance (115); and to output information received from the remote appliance (115) in response to the forwarded information.

6. System (100) according to claim 5, wherein the mobile device (110) is adapted to provide audio and/or visual feedback to a change of weight of the blender (105).

7. System (100) according to claim 5 or 6, wherein the mobile device (110) is adapted to receive a target weight from the remote appliance (115) and to output a signal indicative of the weight received from the blender (105) approaching the target weight.

## Patentansprüche

1. Standmixer (105) für die Speisenzubereitung, der Folgendes umfasst:
- einen Behälter (150) zum Aufnehmen einer Zutat darin,
- einen Elektromotor (155), der mechanisch auf ein Verarbeitungswerkzeug (160) mit Messern in dem Behälter (150) einwirkt,
- einen Gerätesockel (145) mit einem Gewichtssensor zum Ermitteln eines Gesamtgewichts des Standmixers (105),
- eine Drahtloskommunikationseinheit (170) zum Übermitteln des ermittelten Gewichts an eine externe Vorrichtung,
wobei der Gewichtssensor mehrere Kraftmesselemente (210) umfasst,
**dadurch gekennzeichnet, dass** der Gewichtssensor unter dem Gerätesockel (145) angeordnet ist und keine galvanische Trennung zwischen dem Gewichtssensor und einer Hauptstromversorgung des Standmixers (105) besteht.

2. Standmixer (105) nach Anspruch 1, der ferner eine Steuereinheit (165) umfasst, die so ausgelegt ist, dass sie den Standmixer (105) als Reaktion auf ein Signal steuert, das als Antwort auf ein übermitteltes Gewicht über die Kommunikationseinheit empfangen wird.

3. Standmixer (105) nach einem der vorhergehenden Ansprüche, der ferner ein vom Benutzer bedienbares Element (175) zum Regeln einer Drehzahl des Motors (155) umfasst.

4. Standmixer (105) nach einem der vorhergehenden Ansprüche, der ferner ein optisches Element zum Ausgeben eines eindimensionalen Werts umfasst.

5. System (100), das einen Standmixer (105) nach einem der vorhergehenden Ansprüche und ein Mobilgerät (110) mit einer Drahtloskommunikationseinheit umfasst, wobei das Mobilgerät (110) so ausgelegt ist, dass es aus dem Standmixer (105) empfangene Informationen zu einem entfernt gelegenen Gerät (115) weiterleitet und als Reaktion auf die weitergeleiteten Informationen aus dem entfernt gelegenen Gerät (115) empfangene Informationen ausgibt.

6. System (100) nach Anspruch 5, wobei das Mobilgerät (110) so ausgelegt ist, dass es akustische und/oder visuelle Rückmeldungen zu einer Gewichtsänderung des Standmixers (105) bereitstellt.

7. System (100) nach Anspruch 5 oder 6, wobei das Mobilgerät (110) so ausgelegt ist, dass es ein Sollgewicht von dem entfernt gelegenen Gerät (115) empfängt und ein Signal ausgibt, das angibt, dass sich das aus dem Standmixer (105) empfangene Gewicht dem Sollgewicht nähert.

## Revendications

1. Mélangeur (105) pour la préparation alimentaire, le mélangeur (105) comprenant :
- un réceptacle (105) pour contenir des ingrédients à l'intérieur de celui-ci,
- un moteur électrique (155) agissant mécaniquement sur un outil de traitement (160) comprenant des lames à l'intérieur du réceptacle (150)
- une unité de base (145) comprenant un capteur de poids pour déterminer un poids brut du mélangeur (105),
- une unité de communication sans fil (170) permettant de transmettre le poids déterminé à un dispositif externe, dans lequel le capteur de poids comprend plusieurs éléments de mesure de force (210),
- **caractérisé en ce que** le capteur de poids est disposé en dessous de l'unité de base (145) et **en ce qu'**il n'y a aucune séparation galvanique entre le capteur de poids et une alimentation électrique principale du mélangeur (105).

2. Mélangeur (105) selon la revendication 1, comprenant en outre une unité de commande (165) qui est adaptée pour commander le mélangeur (105) en réponse à un signal reçu par l'intermédiaire de l'unité de communication en réponse à un poids transmis.

3. Mélangeur (105) selon l'une des revendications précédentes, comprenant en outre un élément actionnable par un utilisateur (175) pour régler une vitesse de moteur (155).

4. Mélangeur (105) selon l'une des revendications précédentes, comprenant en outre un élément optique pour délivrer une valeur à une dimension.

5. Système (100), comprenant un mélangeur (105) selon l'une des revendications précédentes, et un appareil mobile (110) comprenant une unité de communication sans fil, dans lequel l'appareil mobile (110) est adapté pour transmettre des informations reçues du mélangeur (105) à un dispositif situé à distance (115), et pour délivrer des informations reçues du dispositif situé à distance (115) en réponse aux informations transmises.

6. Système (100) selon la revendication 5, dans lequel l'appareil mobile (110) est adapté pour fournir une rétroaction audio et/ou visuelle en cas de changement de poids du mélangeur (105).

7. Système (100) selon la revendication 5 ou 6, dans lequel l'appareil mobile (110) est adapté pour recevoir un poids cible du dispositif situé à distance (115) et pour délivrer un signal indicatif du poids reçu du mélangeur (105) approchant le poids cible.
